# EUROPÄISCHE PATENTANMELDUNG

(11) **EP 0 942 143 A1**
(43) Veröffentlichungstag der Anmeldung: **15.09.1999**
(21) Anmeldenummer: 99102892.9
(22) Anmeldetag: 04.03.1999
(51) Int. Cl.: E06B 7/02, F24F 7/013, F24F 5/00

(54) **Fenster mit Lüftungsvorrichtung**

(30) Priorität: 12.03.1998 DE 29804416 U
(71) Anmelder: Mage GmbH Werke für Kunststoff- und Metallverarbeitung, 72250 Freudenstadt (DE)
(72) Erfinder: Schürmann, Wolfram, 58456 Witten (DE)
(74) Vertreter: KOHLER SCHMID + PARTNER

(57) **Zusammenfassung**

Ein Fenster (1) weist einen Fensterrahmen (2, 3) auf, an dem eine mittels eines Antriebsmotors antreibare Lüftungseinrichtung (7) vorgesehen ist. An dem Fensterrahmen (2, 3) sind Mittel zur Umwandlung von Solarenergie in Antriebsenergie des Antriebsmotors angebracht. Es wurde eine autarke Einheit, nämlich ein Fenster mit Lüftungseinrichtung und integrierter Energiequelle, geschaffen. Es wird auf umweltfreundliche Energieressourcen zurückgegriffen.

## Beschreibung

Die vorliegende Erfindung betrifft ein Fenster mit einem Fensterrahmen, der durch einen Blendrahmen und einen Flugelrahmen gebildet sein kann. Der Fensterrahmen kann aber auch Teil eines Fensters (beispielsweise eines im Dachbereich angeordneten Dachflachenfensters) sein, das nicht zum Öffnen bestimmt ist, so daß kein Flügelrahmen, sondern nur ein in einer Wand befestigter Blendrahmen vorhanden ist. Am Fensterrahmen, d. h. innerhalb und/oder außerhalb eines Hohlprofils des Fensterrahmens, ist eine mittels eines Antriebsmotors antreibbare Lüftungseinrichtung vorgesehen.

Einerseits müssen Fenster, Fenstertüren oder ähnliche Vorrichtungen einen ausreichenden Wärmeschutz bieten. Es soll verhindert werden, daß kalte Außenluft in einen Innenraum eines Gebäudes dringt.

Andererseits soll aber auch bei geschlossenem Fenster ein Luftaustausch zwischen innen und außen möglich sein, damit vor allem Schad- und Geruchsstoffe abtransportiert werden können. Ein Durchgang von Wärme durch ein Fenster von der warmen Raumluft zur kalten Außenluft kann sowohl durch das Fenstermaterial, Glas, Holz, Metall und/oder Kunststoff als auch über die Fugen und Falze des Fensters erfolgen (natürlicher Luftaustausch). Ein derartiger Abtransport von Schad-und Geruchsstoffen dient vor allem der Erzeugung eines behaglichen Raumklimas. Weitere wichtige Faktoren für ein behagliches Raumklima sind die relative Luftfeuchte, die Lufttemperatur und Luftströmung. Hinsichtlich des Zustandekommens der Luftströmung durch das Fenster hindurch wird zwischen natürlicher und maschineller Lüftung unterschieden. Die natürliche Luftströmung durch die Fugen zwischen Wand und Fensterrahmen (Blendrahmen bzw. Flügelrahmen) erfolgt unkontrolliert und nicht definiert. Insbesondere bei Fenstern, die nicht geöffnet werden können, ist eine maschinelle Lüftung notwendig. Deshalb ist Gegenstand der vorliegenden Erfindung die Ausbildung einer maschninellen oder mechanischen Lüftung an einem Fenster, die in der Regel durch einen motorbetriebenen Ventilator gebildet wird. Mit Hilfe des Ventilators kann ein bewußt herbeigeführter Luftdurchgang zwischen innen und außen sichergestellt werden.

Maschinelle Lüftungseinrichtungen erfordern zum Betrieb des Ventilators den Anschluß an eine Energiequelle. Aus diesem Grund müssen, meist von dem Fenster ausgehend, elektrische Leitungen zu einer Stromquelle verlegt werden, wenn ein Elektromotor zum Antrieb des Ventilators verwendet wird.

Ziel der vorliegenden Erfindung ist es, eine autarke Einheit, nämlich ein Fenster mit Lüftungseinrichtung und integrierter Energiequelle zu schaffen, wobei auf umweltfreundliche Energieressourcen zurückgegriffen werden soll.

Die erfindungsgemäße Lösung besteht in einem Fenster der eingangs genannten Art, bei dem am Fensterrahmen Mittel zur Umwandlung von Solarenergie in Antriebsenergie des Antriebsmotors angebracht sind.

Fenster sind in der Regel über etliche Stunden jeden Tag der Sonneneinstrahlung ausgesetzt. Daher wird vorgeschlagen, den Antriebsmotor solargetrieben auszubilden. Vorteilhafterweise kann eine maschinelle Lüftungseinrichtung für eine Luftzirkulation von innen nach außen bzw. umgekehrt mit einer Technik kombiniert werden, die eine zunehmende Umweltverschmutzung und die Gefahr eines globalen Klimawandels mindert.

Solarenergie läßt sich auf unterschiedliche Weise nutzen, um einen Antriebsmotor der Lüftungseinrichtung zu betreiben. Bei einer bevorzugten Ausführungsform umfassen die Mittel zur Umwandlung von Solarenergie photovoltaische Zellen, die an Außenflächen des Fensterrahmens (Blendrahmen oder Flügelrahmen) vorgesehen sind, und mittels derer elektrische Energie für einen Elektromotor erzeugbar ist. Hierbei wird Sonnenlicht in Folge des physikalischen Photoeffekts direkt in Elektrizität umgewandelt. Es können Siliziumkristalle für photovoltaische Zellen mit hoher Spannung und hohem Wirkungsgrad verwendet werden, die an Außenflächen des Blendrahmens oder Flügelrahmens montiert werden können. Diese photovoltaischen Zellen können die Außenflächen von Blendrahmen oder Flügelrahmen komplett oder teilweise abdecken, so daß sie in das äußere Erscheinungsbild des Fensters optimal integriert sind. Die photovoltaischen Zellen können möglichst flach ausgebildet sein, so daß die Dicke von Blendrahmen oder Flügelrahmen nur unwesentlich erhöht wird. Die photovoltaischen Zellen können auch an Leibungselementen der das Fenster tragenden Wand oder im Eindeckrahmen-Bereich angebracht sein. Bei Dachflächenfenstern können die photovoltaischen Zellen auch in die Dachfläche integriert werden.

Eine andere Ausführungsform besitzt ebenfalls einen Elektromotor als Antriebsmotor. Die Mittel zur Umwandlung von Solarenergie umfassen einen Kollektor zum Einfangen der Sonnenstrahlung, einen Wärmespeicher und einen Konverter zur Umwandlung von gespeicherter Wärmeenergie in elektrische Energie für den Antriebsmotor. In diesem Fall wird von einem anderen Ansatz zur Nutzung der Solarenergie Gebrauch gemacht, der in einem Antrieb von Generatoren mittels Strahlungswärme besteht. Zur Umwandlung von Solarenergie können verschiedene Kollektortypen (parabolförmige Reflektoren) zur Anwendung kommen, mittels derer Sonnenstrahlung gebündelt und fokussiert werden kann, um ein wärmespeicherndes Medium (z. B. Wasser) zu erwärmen. Die Außenflächen von Fensterrahmen könnten parabolartig gekrümmt sein, so daß die Kollektoren einstückig mit dem Fenster verbunden sind.

Als Antriebsmotor wäre bei dieser Ausführungsform (Nutzung der Wärmeenergie) auch ein Heißgasmotor als Antriebsmotor denkbar, der durch Wärmezufuhr von außen angetrieben wird, indem eine im Motorblock eingeschlossene Gasmenge einen Kolben in Bewegung setzt.

Die Lüftungseinrichtung läßt sich auch mit einer eingebauten Wärmerückgewinnungseinrichtung kombinieren, die der erwärmten Abluft Wärmeenergie entziehen kann, die wiederum in den Antriebszyklus für den Antriebsmotor oder zur Erwärmung des Luftstroms integriert werden kann.

Die Lüftungseinrichtung könnte aber auch erfindungsgemäß durch einen Verbrennungsmotor als Antriebsmotor angetrieben werden, wenn die Mittel zur Umwandlung von Solarenergie eine Vorrichtung zur Wasserstoffgewinnung und eine Brennstoffzelle zur Erzeugung von Antriebsenergie für den Antriebsmotor durch Verbrennung des gewonnenen Wasserstoffs umfassen. Durch Solarenergie gewonnener Wasserstoff könnte als Energiespeicher dienen. Auf eine Elektrode auftreffendes Licht vermag einen elektrischen Strom zu erzeugen, mit dem sich Wasser elektrolytisch in Wasserstoff und Sauerstoff aufspalten läßt, das im Hohlprofil des Blendrahmens oder Flügelrahmens untergebracht ist. Anschließend kann der gewonnene Wasserstoff verbrannt werden, wobei Wasser als einziges Nebenprodukt entsteht. Diese Brennstoffzellentechnik stellt eine umweltfreundliche Art der Energiegewinnung dar und zeichnet sich durch hohe Effektivität aus.

Wünschenswert ist es auch, die Lüftungseinrichtung anzutreiben, wenn beispielsweise keine hohe Sonneneinstrahlung vorhanden ist. In diesem Fall ist es vorteilhaft, wenn ein im Hohlprofil des Fensterrahmens untergebrachter Energiespeicher zur Speicherung der durch Solarenergie gewonnenen Antriebsenergie für den Antriebsmotor vorgesehen ist. In Zeiten hoher Sonneneinstrahlung bzw. nur geringer Nutzung der Lüftungseinrichtung kann gewonnene Energie gespeichert werden, die dann zur Verfügung steht, wenn sie benötigt wird, um die Lüftungseinrichtung anzutreiben.

Der Energiespeicher einer Variante der Erfindung kann ein wiederaufladbarer Akkumulator sein. In Frage kommen beispielsweise Akkumulatoren auf Lithium-Ionen-Basis, die eine flache Bauweise und keinen sogenannten Memory-Effekt besitzen. Der Akkumulator kann in Hohlprofile von Blendrahmen oder Flügelrahmen eingebaut werden.

Zur Verbesserung des Raumklimas kann die Lüftungseinrichtung mit einer Befeuchtungseinrichtung für den Lüftungsstrom kombiniert werden. Die Befeuchtungseinrichtung kann ebenfalls am Fensterrahmen (Blendrahmen oder Flügelrahmen) vorgesehen sein bzw. in diese Rahmenteile eingebaut sein, wobei deren Antriebsmotor ebenfalls über die durch Umwandlung der Solarenergie gewonnene Antriebsenergie antreibbar ist. Ebenso könnte im Blendrahmen oder Flügelrahmen oder an diesen Rahmenteilen auch eine Heizungseinrichtung ausgebildet sein, so daß die zugeführte Außenluft über die Sonneneinstrahlung erwärmt wird.

Eine interessante Ausführungsform ergibt sich durch den Einbau der Befeuchtungseinrichtung in einer Ausführungsform mit Brennstoffzellenantrieb für die Lüftungseinrichtung. Das durch die Brennstoffzelle erzeugte Wasser kann gleichzeitig als Befeuchtungsmedium für den Lüftungsstrom eingesetzt werden.

Weitere Merkmale und Vorteile der Erfindung ergeben sich aus der nachfolgenden Beschreibung eines Ausführungsbeispiels anhand der Zeichnung, die erfindungswesentliche Einzelheiten zeigt, und aus den Ansprüchen. Die einzelnen Merkmale können je einzeln für sich oder zu mehreren in beliebiger Kombination bei einer Ausführungsform der Erfindung verwirklicht sein.

Es zeigt:
- **Fig. 1**: eine Frontansicht eines in eine Gebäudewand eingebauten erfindungsgemäßen Fensters;
- **Fig. 2**: einen Schnitt längs der Linie II-II durch das Fenster nach Fig. 1.

Die Erfindung ist den Figuren schematisch dargestellt, so daß die wesentlichen Merkmale der Erfindung gut zu erkennen sind. Die Darstellungen sind nicht notwendigerweise maßstäblich zu verstehen.

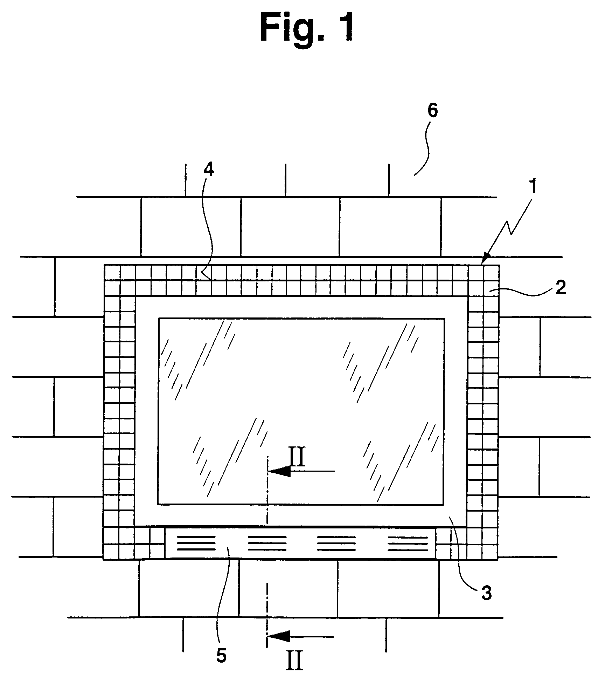

Aus der **Fig. 1** ist ersichtlich, daß ein Fenster 1 mit einem Fensterrahmen aus einem Blendrahmen 2 und einem Flügelrahmen 3 aufgebaut ist. Die Öffnungsart des Fensters 1 ist ein Drehflügel, wobei jede andere Öffnungsart des Fensterflügels ebenfalls möglich ist. An einer Außenfläche des Blendrahmens 2 sind Mittel zur Umwandlung von Solarenergie in elektrische Energie vorgesehen, die durch eine Vielzahl photovoltaischer Zellen 4 ausgebildet sind. Mittels der durch Solarenergie gewonnenen elektrischen Energie kann ein Antriebsmotor für eine mechanische Lüftungseinrichtung angetrieben werden, die hinter einer Blende 5 an dem Blendrahmen 2 angebracht ist. Das Fenster 1 ist innerhalb einer Gebäudeöffnung einer Gebäudewand 6 angeordnet.

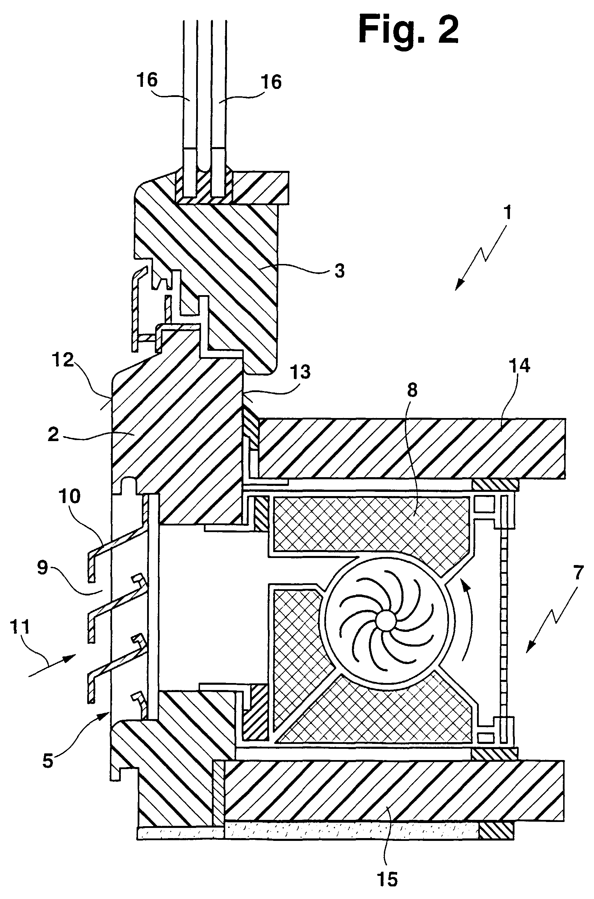

**Fig. 2** zeigt einen Schnitt durch eine Lüftungseinrichtung 7 des Fensters 1. Die Lüftungseinrichtung 7 umfaßt einen Ventilator 8 und einen in der Figur nicht gezeigten Antriebsmotor. Der Blendrahmen 2 weist Lüftungsschlitze 9 auf, die teilweise durch Abdeckungen 10 der Blende 5 verschlossen sind, um das Eindringen von Feuchtigkeit und Schmutz zu verhindern. Durch den Antrieb des Ventilators 8 kann Außenluft in Pfeilrichtung 11 angesaugt werden, so daß die Luft in einen Innenbereich des Gebäudes strömen kann. Die Energie zum Antrieb des Antriebsmotors des Ventilators 8 wird durch Mittel zur Umwandlung von Solarenergie in elektrische Energie (photovoltaische Zellen 4 gemäß Fig. 1) erzeugt, die an einer Außenfläche 12 des Blendrahmens befestigt sind.

Die Lüftungseinrichtung 7 ist einerseits an einer Rückseite 13 des Blendrahmens 2 und andererseits zwischen Teilen 14 und 15 einer inneren Fensterbank befestigt.

Der Flügelrahmen 3 ist schwenkbar mit dem Blendrahmen 2 verbunden, so daß ein Drehflügel des Fensters 1 gebildet wird. An dem Flügelrahmen 3 sind Fensterscheiben 16 und 17 in Form einer Doppelverglasung abgedichtet fixiert.

Das Fenster 1 besteht aus dem Blendrahmen 2 und dem mindestens einen Flügelrahmen 3. Am Blendrahmen 2 oder am Flügelrahmen 3 ist eine mittels eines Antriebsmotors antreibare Lüftungseinrichtung 7 angeordnet ist. Der Blendrahmen 2 und/oder der mindestens eine Fensterrahmen 3 weisen Mittel zur Umwandlung von Solarenergie in Antriebsenergie des Antriebsmotors auf. Das Fenster 1 stellt eine autarke energietechnische Einheit von Fenster 1, Lüftungseinrichtung 7 und integrierter Energiequelle, dar, wobei auf umweltfreundliche Energieressourcen zurückgegriffen wird. Das Fenster 1 kann als beliebiges Fenster in Gebäuden Verwendung finden. Darüber hinaus ist es vorstellbar, das Fenster 1 auch in Wohncontainern und mobilen Wohneinheiten, wie Wohnwagen oder dergleichen, einzusetzen.

## Patentansprüche

1. Fenster (1),
mit einem Fensterrahmen (2, 3), an dem eine mittels eines Antriebsmotors antreibbare Lüftungseinrichtung (7) vorgesehen ist,
**dadurch gekennzeichnet,**
daß an dem Fensterrahmen (2, 3) Mittel zur Umwandlung von Solarenergie in Antriebsenergie des Antriebsmotors angebracht sind.

2. Fenster nach Anspruch 1 mit einem Elektromotor als Antriebsmotor , dadurch gekennzeichnet, daß die Mittel zur Umwandlung von Solarenergie photovoltaische Zellen (4) umfassen, die an Außenflächen (12) des Fensterrahmens (2, 3) vorgesehen sind, und mittels derer elektrische Energie für den Antriebsmotor erzeugbar ist.

3. Fenster nach Anspruch 1 mit einem Elektromotor als Antriebsmotor, dadurch gekennzeichnet, daß die Mittel zur Umwandlung von Solarenergie einen Kollektor zum Einfangen der Sonnenstrahlung, einen Wärmespeicher und einen Konverter zur Umwandlung von gespeicherter Wärmeenergie in elektrische Energie für den Antriebsmotor umfassen.

4. Fenster nach Anspruch 1 mit einem Verbrennungsmotor als Antriebsmotor, dadurch gekennzeichnet, daß die Mittel zur Umwandlung von Solarenergie eine Vorrichtung zur Wasserstoffgewinnung und eine Brennstoffzelle zur Erzeugung von Antriebsenergie für den Antriebsmotor durch Verbrennung des gewonnenen Wasserstoffs umfassen.

5. Fenster nach einem der vorhergehenden Ansprüche, dadurch gekennzeichnet, daß ein im Hohlprofil des Fensterrahmens (2, 3) untergebrachter Energiespeicher zur Speicherung der durch Solarenergie gewonnenen Antriebsenergie für den Antriebsmotor vorgesehen ist.

6. Fenster nach Anspruch 5, dadurch gekennzeichnet, daß der Energiespeicher ein wiederaufladbarer Akkumulator ist.

7. Fenster nach einem der vorhergehenden Ansprüche, dadurch gekennzeichnet, daß im Fensterrahmen (2, 3) eine Befeuchtungseinrichtung für den Lüftungsstrom vorgesehen ist, deren Antriebsmotor ebenfalls über die durch Umwandlung der Solarenergie gewonnene Antriebsenergie antreibbar ist.

8. Fenster nach Anspruch 4 und 7, dadurch gekennzeichnet, daß die Befeuchtungseinrichtung und die Brennstoffzelle derart miteinander gekoppelt sind, daß das in der Brennstoffzelle erzeugte Wasser als Befeuchtungsmedium für den Lüftungsstrom einsetzbar ist.
